(19) Europäisches Patentamt

European Patent Office

Office européen des brevets

(11) EP 1 489 849 A1

(12) **EUROPEAN PATENT APPLICATION**

(43) Date of publication:
**22.12.2004 Bulletin 2004/52**

(51) Int Cl.⁷: $H04N\ 7/36$, $H04N\ 7/46$, $H04N\ 7/26$

(21) Application number: **04252962.8**

(22) Date of filing: **20.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.06.2003 KR 2003038797**

(71) Applicant: **Samsung Electronics Co., Ltd.**
**Suwon-si, Gyeonggi-do 442-742 (KR)**

(72) Inventors:
• **Lee, Sung-hee, 306-602, Samik 3rd Apt**
**Suwon-si, Gyeonggi-do (KR)**
• **Hur, Bong-soo, Gasan Apt 13**
**Suwon-si, Gyeonggi-do (KR)**

(74) Representative: **Geary, Stuart Lloyd et al**
**Venner Shipley LLP**
**20 Little Britain**
**London EC1A 7DH (GB)**

(54) **Adaptive block-based motion compensation**

(57) A motion compensation apparatus to provide block-based motion compensation, and a method thereof. A first motion compensation interpolator calculates a first interpolation pixel by reading a first and a second pixel corresponding to a motion vector of an estimated current block respectively from a current and a previous frame or field. A second motion compensation interpolator calculates a second interpolation pixel by reading a third and a fourth pixel corresponding to a motion vector of peripheral blocks adjacent to the current block respectively from the inputted current and previous frame or field. A candidate interpolation pixel calculator calculates a candidate interpolation pixel by allocating a predetermined weight to the first and the second interpolation pixels, among the current blocks. A motion analyzer analyzes the motion vectors of the current block and the peripheral blocks, and determines discontinuities between the blocks. A final interpolation pixel selector selects either of the first interpolation pixel and the candidate interpolation pixel as a final interpolation pixel, according to the discontinuities determined at the motion analyzer. Accordingly, by applying an overlap block motion compensation according to discontinuities between the current and the peripheral blocks, an image can be provided in which the block artifacts are removed or reduced.

EP 1 489 849 A1

**Description**

The present invention relates to a block-based motion compensation method and a video processing apparatus for performing block-motion compensation on a digital video signal.

The various MPEG video compression methods remove temporal redundancy by a motion estimation process which finds a block in a preceding frame or field that is most similar to a block in the current frame or field. Spatial redundancy is removed by employing a discrete cosine transform (DCT).

The motion estimation is generally carried out by a block matching algorithm (BMA). The BMA is used to estimate one motion vector per block by comparing two consecutive frames, namely, the previous frame or field and the current frame or field based on the assumption that pixels in the compared blocks are translated and not rotated.

The motion vector estimated at a transmitter is transmitted to a receiver, together with a motion prediction error, such as sum of absolute difference (SAD), which occurs between the current frame or field and the previous frame or field. Then, motion compensation is performed in the receiver using the current and/or the previous frame or field with the received motion vector, and the frame or field is adaptively restored according to the received motion prediction error.

However, when the compressed data is restored by the conventional method of motion compensation, block artefacts may occur in the restored image. The occurrence of block artefacts is a phenomenon in which the borders between blocks are perceptible and the image appears blocky to the viewer.

A known motion compensation method uses overlap block motion compensation (OBMC) on the basis of entire blocks to prevent the block artefacts. However, the OBMC itself has problem in that it can cause a general blurring of the image.

A block-based motion compensation method, according to the present invention, is characterised by selectively performing motion compensation of adjacent blocks by comparing the motion vectors of adjacent blocks and selectively performing a block motion compensation process or an overlapped block motion compensation process in dependence on said comparison.

A video processing apparatus for performing block-motion compensation on a digital video signal, according to the present invention, is characterised by signal processing means for selectively performing motion compensation of adjacent blocks by comparing the motion vectors of adjacent blocks and selectively performing a block motion compensation process or an overlapped block motion compensation process in dependence on said comparison.

Preferably, said comparison comprises determining whether the difference between the motion vectors meets a predetermined criterion and the overlapped block motion compensation process is performed if said criterion is met.

Preferably, in said block motion compensation process, a pixel is generated by calculating a weighted sum of a pixel in the current frame or field and the corresponding pixel in a preceding frame or field.

Preferably, said overlapping block motion compensation process, a final pixel is generated by interpolating first and second temporally interpolated pixels, the first temporally interpolated pixel being a weighted sum of a pixel in a first block in the current frame or field and the corresponding pixel in a preceding frame or field and the second temporally interpolated pixel being a weighted sum of a pixel in a second adjacent block in the current frame or field and the corresponding pixel in a preceding frame or field. More preferably, the pixels used to interpolate the final pixel all relate to the same location in the image being processed due to the overlapping of the blocks.

Additional preferred and optional features are set forth in the claims appended hereto.

Embodiments of the present invention will now be described, by way of example, with reference to the accompanying drawings, in which:

Figure 1 is a block diagram of a block-based motion compensation apparatus, according to the present invention;
Figure 2 shows motion vectors estimated with respect to a current block and peripheral blocks;
Figure 3 illustrates a method of calculating a correlation coefficient for a relative location;
Figure 4 illustrates an OBMC process used to remove block artefacts;
Figure 5 is a flowchart illustrating a method of block-based motion compensation used by the apparatus of Figure 1; and
Figure 6 is a block diagram schematically showing another block-based motion compensation apparatus, according to the present invention.

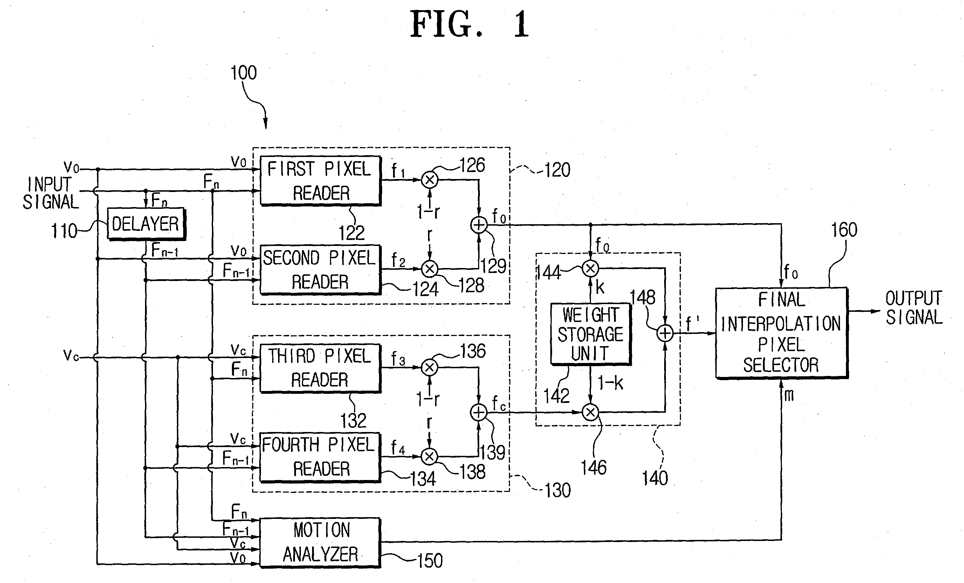

Referring to Figure 1, the block-based motion compensation apparatus 100 includes a delay 110, a first motion compensation interpolator 120, a second motion compensation interpolator 130, a candidate interpolation pixel calculator 140, a motion analyzer 150 and a final interpolation pixel selector 160.

The motion compensation apparatus 100 performs motion compensation for a current block to be interpolated and its peripheral blocks and a motion error, using BMA-estimated motion vectors.

The motion compensation apparatus 100 receives a motion vector $v_0$, estimated with respect to the current block, and motion vectors $v_1$ to $v_8$, estimated with respect to peripheral blocks surrounding the current block. In addition, the motion compensation apparatus 100 receives the current frame or field $F_n$ as an input signal.

The input current frame or field $F_n$ is supplied to first and third pixel readers 122, 132 and to a motion analyzer 150, which is described below.

The delay 110 delays the current input frame or field $F_n$ for a predetermined time, and outputs the delayed frame or field $F_{n-1}$. The frame or field $F_{n-1}$, output from the delay 110, is provided to second and fourth pixel readers 124, 134 and the motion analyzer 150, which is described below.

The first motion compensation interpolator 120 includes the first and second pixel readers 122, 124, first and second multipliers 126, 128 and a first adder 129.

The first motion compensation interpolator 120 reads first and second pixels $f_1$ and $f_2$, corresponding to the estimated motion vector $v_0$ of the current block, from the current and the previous frame or fields $F_n$ and $F_{n-1}$, and calculates a first interpolation pixel.

More particularly, the first pixel reader 122 reads the first pixel $f_1$, corresponding to the motion vector $v_0$ of the current block, from the current frame or field $F_n$, and the second pixel reader 124 reads the second pixel $f_2$, corresponding to the motion vector $v_0$ of the current block, from the previous frame or field $F_{n-1}$.

The first multiplier 126 multiplies a correlation coefficient of the relative location between a frame or field $F_i$, to be interpolated by the current and previous frames or fields $F_n$ and $F_{n-1}$, by the read first pixel $f_1$ and outputs the result as first multiplication data. The correlation coefficient relates to a frame rate conversion and is calculated by Equation 1 below.

[Equation 1]

$$1 - r = 1 - \frac{b}{a+b} = \frac{a}{a+b}$$

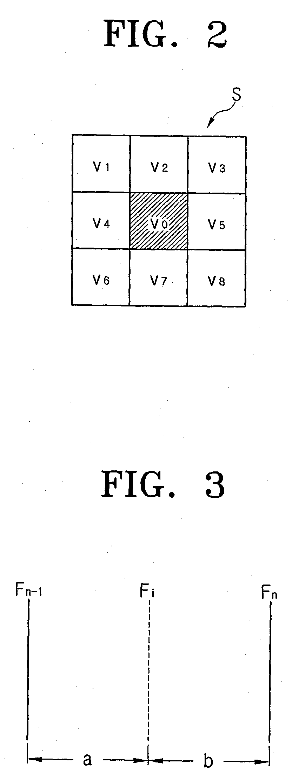

Referring to Figure 3 and Equation 1, (*1-r*) represents the correlation coefficient, *a* is the minimum distance between the frame or field $F_i$ to be interpolated and the previous frame or field $F_{n-1}$, and *b* is the minimum distance between the frame or field $F_i$ to be interpolated and the current frame or field $F_n$.

The second multiplier 128 multiplies another correlation coefficient r, acquired by subtracting *1-r* from 1, by the second pixel $f_2$, and outputs the result as second multiplication data. Accordingly, the sum of the correlation coefficients applied to the first and second pixels $f_1$ and $f_2$ is '1'.

The first adder 129 adds the first and second multiplication data together and outputs the result as the first interpolation pixel $f_0$.

The second motion compensation interpolator 130 includes the third and the fourth pixel readers 132, 134, third and fourth adders 136, 138 and a second adder 139.

The second motion compensation interpolator 130 reads third and fourth pixels $f_3$ and $f_4$, corresponding to the estimated motion vector $v_c$, estimated with respect to predetermined peripheral blocks among a plurality of the peripheral blocks, from the current and previous frames or fields $F_n$ and $F_{n-1}$ and calculates a second interpolation pixel $f_c$.

In particular, the third pixel reader 132 reads the third pixel $f_3$, corresponding to the motion vector $v_c$ of the predetermined peripheral blocks starting from the input current frame or field $F_n$. The fourth pixel reader 134 reads the fourth pixel $f_4$, corresponding to the motion vector $v_c$ of the predetermined peripheral blocks starting from the previous frame or field $F_{n-1}$.

The third multiplier 136 multiplies the correlation coefficient *1-r* by the third pixel $f_3$ and outputs the result as third multiplication data. The fourth multiplier 138 multiplies the correlation coefficient *r* by the fourth pixel $f_4$ and outputs the result as fourth multiplication data. The correlation coefficients multiplied by the third and fourth pixels $f_3$ and $f_4$, are the same as the correlation coefficients applied to the first and second pixels $f_1$ and $f_2$.

The second adder 139 adds the third and the fourth multiplication data and outputs the result as the second interpolation pixel $f_c$.

The first and second interpolation pixels $f_0$ and $f_c$ are calculated by Equation 2 and Equation 3 below.

[Equation 2]

$$f_0 = (1-r) \cdot f(x - \frac{v_0}{2}, n) + r \cdot f(x + \frac{v_0}{2}, n-1) = (1-r) \cdot f_1 + r \cdot f_2$$

[Equation 3]

$$f_c = (1-r) \cdot f(x - \frac{v_c}{2}, n) + r \cdot f(x + \frac{v_c}{2}, n-1) = (1-r) \cdot f_3 + r \cdot f_4$$

Where, *x* is the coordinate data of a location in a predetermined block, that is, in either the current block or the peripheral block, *n* is the temporal location of the current frame or field $F_n$, (*n-1*) is the temporal location of the previous frame or field $F_{n-1}$, and *r* ($0 \leq r \leq 1$) is the correlation coefficient applied to the second and fourth pixels.

The candidate interpolation pixel calculator 140 includes a weight storage unit 142, fifth and sixth multipliers 144, 146 and a third adder 148.

The candidate interpolation pixel calculator 140 can remove or reduce block artefacts by applying an OBMC process to blocks associated with block artefacts among the blocks to be interpolated. For this, the candidate interpolation pixel calculator 140 allocates a predetermined weight to the first and second interpolation pixels $f_0$ and $f_c$ among the current blocks to be interpolated, according to the relative positions where the first and second interpolation pixels $f_0$ and $f_c$ are interpolated, and then calculates a candidate interpolation pixel f'.

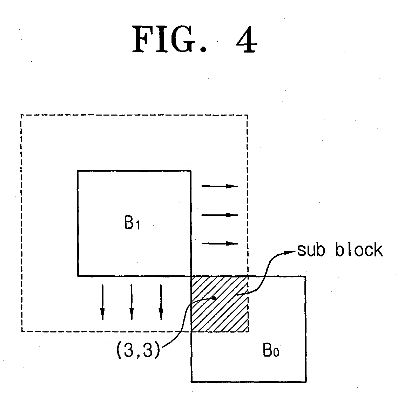

The OBMC process is based on the fact that there is a high correlation between the motion vector $v_0$ of the current block and the motion vector $v_c$ of the peripheral blocks. Accordingly, the OBMC process partially overlaps the current block $B_0$ with a predetermined peripheral block $B_1$ of a predetermined size by extending it in width/length directions, as shown by arrows in Figure 4, and performs the motion compensation with respect to the overlapped area, i.e. a sub block which is indicated in Figure 4 by cross-hatching, as a unit area for motion compensation. That is, the OBMC process comprises calculating the candidate interpolation pixel f', which will be used for interpolation by allocating weights to respective areas of the current interpolation, based on the assumption that the motion vectors $v_0$ and $v_1$ of the current and the peripheral blocks $B_0$ and $B_1$ influence the motion compensation in the overlapped sub block.

The weight storage part 142 is allocated with weights for the relative location of the pixels in the current block to be interpolated. That is, when there is a plurality of first pixels $f_1$, corresponding to the current motion vector $v_0$, in the current block, a weight k is allocated for application to the first interpolation pixel $f_0$, which is calculated whenever the plurality of first pixels $f_1$ is read. The first interpolation pixel $f_0$ is allocated for each interpolation location. The weight applied to the second interpolation pixel $f_c$ is (1-k).

The weights corresponding to the relative positions of the pixels, which are stored in the weight storage part 142, become larger as the position becomes closer toward the border of the current block $B_0$. That is, the weight k for the first interpolation pixel $f_0$ becomes smaller toward the border of the current block $B_0$ having the sub block, as the weight k reflects the motion vector $v_0$ of the current block $B_0$. On the other hand, the weight (1-k) for the second interpolation pixel $f_c$ becomes larger toward the border of the current block $B_0$ having the sub block as the weight (1-k) reflects the motion vector $v_1$ of the peripheral block $B_1$.

Therefore, when the first and second interpolation pixels $f_0$ and $f_c$ are calculated, the weight storage part 142 reads the weights k and (1-k), corresponding to the locations where the first and second interpolation pixels $f_0$ and $f_c$ are interpolated. For instance, if the interpolation location of the calculated first and second interpolation pixels is (3, 3) in the current block, the weight storage part 142 reads the predetermined weight k corresponding to the location (3, 3) and provides the weight k to the fifth multiplier 144 and the weight (1-k) to the sixth multiplier 146. The sum of the weights being provided to the fifth and sixth multipliers 144 and 146 is '1'.

The fifth multiplier 144 outputs a fifth multiplication data by multiplying the first interpolation pixel $f_0$ by the weight k with respect to a location for interpolation of the first interpolation pixel $f_0$. The sixth multiplier 146 outputs sixth multiplication data by multiplying the second interpolation pixel $f_c$ by the weight (1-k) with respect to a location for interpolation of the second interpolation pixel $f_c$.

The third adder 148 calculates the candidate interpolation pixel f' by adding the fifth and sixth multiplication data outputted from the fifth and sixth multipliers 144, 146. Accordingly, the candidate interpolation pixel f', output from the candidate interpolation pixel calculator 140, is obtained by Equation 4 below:

[Equation 4]

$$f' = k \cdot f_0 + (1-k) \cdot f_c$$

where **k** is the weight applied to the first interpolation pixel $f_0$, and **(1-k)** is the weight applied to the second interpolation pixel $f_c$, and $0 \le r \le 1$.

The motion analyzer 150 analyzes the motion vectors $v_0$ and $v_c$ of the current block and the peripheral blocks and determines discontinuities between the current and the peripheral blocks. More particularly, if it is determined that the current block and the peripheral blocks are discontinuous in the motion vector field (not shown), the motion analyzer 150 determines that block artefacts would occur and outputs a motion flag m in a first state to trigger performance of motion compensation by the OBMC process.

On the other hand, if it is determined that the current and peripheral blocks are continuous in the motion vector field (not shown), the motion analyzer 150 outputs the motion flag m in a second state so that the default motion compensation is performed.

The discontinuities between blocks are likely to occur where the motion vector $v_0$ of the current block and the motion vector of the peripheral block, such as $v_1$, are much different from each other. Therefore, in order to detect the discontinuities, the motion analyzer 150 compares the motion vectors $v_0$ and $v_c$ of the current and the peripheral block, and thereby determines whether there are discontinuities between the current block and peripheral blocks.

More particularly, the motion analyzer 150 calculates the deviation between the motion vector $v_0$ of the current block and the motion vector $v_1$ of a peripheral block. If the deviation is larger than the preset threshold, the motion analyzer 150 outputs m=1 to the final interpolation pixel selector 160. That is, the motion flag m by which the candidate interpolation pixel f', calculated by the candidate interpolation pixel calculator 140, is selected as the final interpolation pixel f.

On the other hand, if the deviation is smaller than the preset threshold, the motion analyzer 150 outputs m=0 to the final interpolation pixel selector 160, i. e. outputs the motion flag state which selects the first interpolation pixel $f_0$, calculated by the first motion compensation interpolator 120, as the final interpolation pixel f.

The final interpolation pixel selector 160 selects one of the first interpolation pixel f0 and the candidate interpolation pixel f' according to the discontinuities determined in the motion analyzer 150, using a multiplexer in this embodiment of the present invention.

[Equation 5]

$$ f = \begin{cases} f', & if \\ f_0, & otherwise \end{cases} \quad m = 1 $$

Referring to Equation 5, when the motion flag m=1 is input from the motion analyzer 150, the final interpolation pixel selector 160 selects the candidate interpolation pixel f', calculated by the OBMC process, as the final interpolation pixel f. However, when the motion flag m=0 is input from the motion analyzer 150, the final interpolation pixel selector 160 selects the first interpolation pixel, calculated from the first motion compensation interpolator 120 as the final interpolation pixel f.

The motion compensation process will now be described.

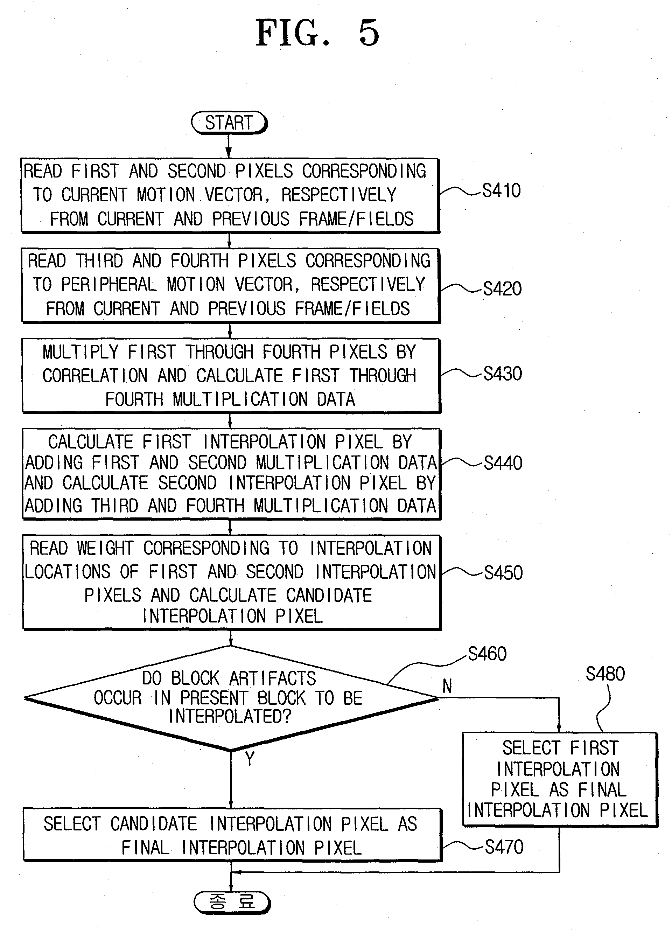

Referring Figures 1 to 5, first, the first and the second pixel readers 122, 124, read respectively first and second pixels $f_1$ and $f_2$, corresponding to the current motion vector $v_0$, from the current and the previous frame or fields $F_n$ and $F_{n-1}$ in operation S410. Then, the third and the fourth pixel readers 132, 134 read third and fourth pixels $f_3$ and $f_4$, corresponding to the peripheral motion vector $v_c$, from the current and the previous frame or fields $F_n$ and $F_{n-1}$ in operation S420.

When the operation S420 is completed, the first through fourth multipliers 126,128, 136, 138 adaptively multiply the predetermined correlation coefficients (*1-r*) and *r*, which are calculated using Equation 1, by the first through fourth pixels $f_1$ through $f_4$ and calculate first through fourth multiplication data in operation S430.

Next, the first adder 129 calculates the first interpolation pixel $f_0$ by adding the first and second multiplication data together and the second adder 139 calculates the second interpolation pixel $f_c$ by adding the third and fourth multiplication data together in operation S440.

When the operation S440 is completed, the candidate interpolation pixel calculator 140 performs motion compensation sub-block by sub-block, using the OBMC process. In particular, the candidate interpolation pixel calculator 140 allocates predetermined weights to the first and second interpolation pixels $f_0$ and $f_c$ according to the relative positions, where the first and second interpolation pixels $f_0$ and $f_c$ among the current blocks are interpolated, and calculates the candidate interpolation pixel f' in operation S450. At this time, if the first interpolation pixel $f_0$ is allocated the weight *k*, the second interpolation pixel $f_c$ is allocated the weight (*1-k*).

The motion analyzer 150 analyzes the motion vector $v_0$ of the current block and the motion vector $v_c$ of the peripheral blocks to determine discontinuities between the current block and the peripheral blocks, and outputs the motion flag according to the determined result in operation S460.

For instance, if the deviation between the motion vectors $v_0$ and $v_c$ of the current and the peripheral blocks is larger than the preset threshold, the motion analyzer 150 determines that the block artefacts would occur due to the discontinuities between the current and peripheral blocks and outputs motion flag m=1. If the deviation between the motion vectors $v_0$ and $v_1$ of the current and peripheral blocks is smaller than the preset threshold, the motion analyzer 150 determines that there would be no discontinuities between the current and the peripheral blocks and outputs motion flag m=0.

When the motion flag m=1 is input from the operation S460, the final interpolation pixel selector 160 outputs the candidate interpolation pixel f' as the final interpolation pixel f (S470). However, when the motion flag m=0 is input from the operation S460, the final interpolation pixel selector 160 selectively outputs the first interpolation pixel $f_0$ as the final interpolation pixel f, which is calculated from the first motion compensation interpolator 120 (S480).

The above-described block-based motion compensation apparatus 100 and method selectively apply OBMC processing by considering the correlation between the current block and a plurality of peripheral blocks, adjacent to, and preferably surrounding, the current block. That is, with the motion compensation apparatus of Figure 1, the OBMC process is applied with respect to blocks where block artefacts are likely to occur and, as a result, the motion-compensated image is less blocky than would otherwise be the case.

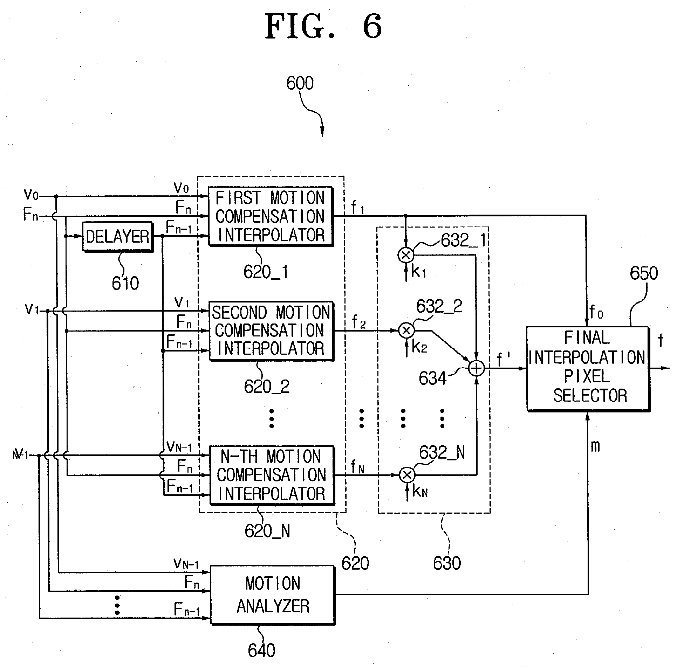

Referring to Figure 6, another block-based motion compensation apparatus 600 includes a delay 610, a motion compensation interpolator 620, a candidate interpolation pixel calculator 630, a motion analyzer 640 and a final interpolation pixel selector 650. The block-based motion compensation apparatus 600 of Figure 6 selectively applies the OBMC process by considering a plurality of peripheral blocks adjacent to the current block.

The delay 610, the motion compensation interpolator 620, the candidate interpolation pixel calculator 630, the motion analyzer 640 and the final interpolation pixel selector 650 of the block-based motion compensation apparatus 600 of Figure 6 have similar functions to the delay 110, the first motion compensation interpolator 120, the second motion compensation interpolator 130, the candidate interpolation pixel calculator 140, the motion analyzer 150 and the final interpolation pixel selector 160 of Figure 1 and will not, therefore, be described again for conciseness's sake.

The motion compensation interpolator 620 has first to N-th motion compensation interpolators 620_1 through 620_N, where N refers to the number of the current block and the peripheral blocks considered during the motion compensation.

The first motion compensation interpolator 620_1 calculates the first interpolation pixel $f_1$ by reading a pixel corresponding to the motion vector of the current motion vector. The second through the N-th motion compensation interpolators 620_2 through 620_N respectively calculate second through the N-th interpolation pixels $f_2$ through $f_n$ by reading pixels corresponding to the motion vector $v_1$ through $v_{N-1}$ of the peripheral motion vectors.

The candidate interpolation pixel calculator 630 comprises a weight storage part (not shown), first through N-th multipliers 632_1 through 632_N and an adder 634.

The candidate interpolation pixel calculator 630 performs motion compensation with respect to blocks where block artefacts would occur among blocks to be interpolated, using an overlap block motion compensation (OBMC) process.

To do this, the respective first through the N-th multipliers 632_1 through 632_N multiply predetermined weights $k_1$ to $k_n$ by the first through the N-th interpolation pixels $f_2$ to $f_n$, according to the relative positions where the first through the N-th interpolation pixels $f_2$ to $f_n$ are interpolated among the current blocks to be interpolated. At this time, it is preferable that the sum of the weights $k_1$ to $k_n$, which are supplied to the first through the N-th multipliers 632_1 through 632_N, is 1. The adder 634 adds the respective data multiplied by the weights $k_1$ to $k_n$, and thereby calculates the candidate interpolation pixel f'.

The motion analyzer 640 determines discontinuities between the current block and the peripheral blocks by analyzing the motion vector $v_0$ of the current block and the motion vectors $v_1$ through $v_{N-1}$ of the peripheral blocks.

The final interpolation pixel selector 650 selectively outputs one of the first interpolation pixel $f_0$ and the candidate interpolation pixel f' according to the result from the motion analyzer 640.

The described block-based motion compensation apparatuses 100, 600 and the method thereof can be widely applied to industry such as a motion picture compression system and frame rate conversion of a high definition television.

As described hereinbefore, according to the block-based motion compensation apparatus, and the method of the same, it is possible to select discontinuous areas between blocks, that is, select the areas where the block artefacts occur, and apply the OBMC only to the selected areas. Accordingly, when the OBMC is selectively applied to the whole block, an image quality deterioration such as blurring can be reduced, and the block artefacts are also prevented or reduced during the motion compensation.

**Claims**

1. A block-based motion compensation method **characterised by** selectively performing motion compensation of adjacent blocks by comparing the motion vectors of adjacent blocks and selectively performing a block motion compensation process or an overlapped block motion compensation process in dependence on said comparison.

2. A method according to claim 1, wherein said comparison comprises determining whether the difference between the motion vectors meets a predetermined criterion and the overlapped block motion compensation process is performed if said criterion is met.

3. A method according to claim 1 or 2, wherein in said block motion compensation process, a pixel is generated by calculating a weighted sum of a pixel in the current frame or field and the corresponding pixel in a preceding frame or field.

4. A method according to claim 1, 2 or 3, wherein said overlapping block motion compensation process, a final pixel is generated by interpolating first and second temporally interpolated pixels, the first temporally interpolated pixel being a weighted sum of a pixel in a first block in the current frame or field and the corresponding pixel in a preceding frame or field and the second temporally interpolated pixel being a weighted sum of a pixel in a second adjacent block in the current frame or field and the corresponding pixel in a preceding frame or field.

5. A method according to claim 4, wherein the pixels used to interpolate the final pixel all relate to the same location in the image being processed due to the overlapping of the blocks.

6. A video processing apparatus for performing block-motion compensation on a digital video signal, the apparatus being **characterised by** signal processing means (100) for selectively performing motion compensation of adjacent blocks by comparing the motion vectors of adjacent blocks and selectively performing a block motion compensation process or an overlapped block motion compensation process in dependence on said comparison.

7. An apparatus according to claim 6, wherein the signal processing means (100) includes comparing means (150) for determining whether the difference between the motion vectors meets a predetermined criterion and is configured to perform the overlapped block motion compensation process if said criterion is met.

**8.** An apparatus according to claim 7, including block motion compensation means (120) configured for generating a pixel by calculating a weighted sum of a pixel in the current frame or field and the corresponding pixel in a preceding frame or field.

**9.** An apparatus according to claim 6, 7 or 8, wherein including overlapping block motion compensation means (120, 130, 140) configured for generating a final pixel by interpolating first and second temporally interpolated pixels, the first temporally interpolated pixel being a weighted sum of a pixel in a first block in the current frame or field and the corresponding pixel in a preceding frame or field and the second temporally interpolated pixel being a weighted sum of a pixel in a second adjacent block in the current frame or field and the corresponding pixel in a preceding frame or field.

**10.** An apparatus according to claim 9, wherein the pixels used to interpolate the final pixel all relate to the same location in the image being processed due to the overlapping of the blocks.

**11.** A block-based motion compensation apparatus comprising:

a first motion compensation interpolator to read a first and a second pixel corresponding to a motion vector of an estimated current block respectively from a current and a previous frame or field inputted, and to calculate a first interpolation pixel;
at least one second motion compensation interpolator to read a third and a fourth pixel corresponding to a motion vector estimated with respect to each of at least one peripheral block adjacent to the current block to be interpolated respectively from the inputted current and previous frame or fields, and to calculate a second interpolation pixel;
a candidate interpolation pixel calculator to calculate a candidate interpolation pixel by allocating a predetermined weight to the first and the second interpolation pixels according to relative locations where the first and the second interpolation pixels are interpolated, among the current blocks to be interpolated;
a motion analyzer to analyze the estimated motion vectors of the current block and the peripheral blocks, and to determine whether the current block and the peripheral blocks are continuous; and
a final interpolation pixel selector to select one among the first interpolation pixel and the candidate interpolation pixel as a final interpolation pixel according to the result determined at the motion analyzer, and to output the selected final interpolation pixel.

**12.** The motion compensation apparatus of claim 11, wherein the motion analyzer compares a deviation of the motion vectors of the current and the peripheral blocks, and when the deviation is equal to or larger than a preset threshold, outputs a signal to the final interpolation pixel selector indicating to select the candidate interpolation pixel calculated from the candidate interpolation pixel calculator as a final interpolation pixel, and when the deviation is smaller than the preset threshold, outputs a signal indicating to select the first interpolation pixel calculated from the first motion compensation interpolator as a final interpolation pixel.

**13.** The motion compensation apparatus of claim 11, wherein the first and the second motion compensation interpolators respectively comprise:

a first pixel reader to read the first pixel corresponding to the motion vector of the current block from the inputted current frame or field;
a second pixel reader to read the second pixel corresponding to the motion vector of the current block from the inputted previous frame or field;
a first and a second multiplier to multiply a relative location correlation coefficient between the current and the previous frame or fields and the frame or field to be interpolated by the read first and second pixels, and to output the result as a first and a second multiplication data; and
a first adder to calculate the first interpolation pixel by adding the first and the second multiplication data outputted from the first and the second multipliers,

wherein the sum of the relative location correlation coefficients which are respectively provided to the first and the second pixels is 1.

**14.** The motion compensation apparatus of claim 13, wherein the relative position correlation coefficient is calculated by a following equation:

$$r = \frac{b}{a+b}$$

where, r is the relative location correlation coefficient multiplied by the second pixel, a is a minimum distance between the frame or field to be interpolated and the previous frame or field, and b is a minimum distance between the frame or field to be interpolated and the current frame or field.

**15.** The motion compensation apparatus of claim 11, wherein the candidate interpolation pixel calculator comprises:

a weight storage part storing weights allocated with respect to the relative locations of the pixels for interpolation in the current block, the weight storage part to read and provide the weight corresponding to positions where the calculated first and second interpolation pixels are interpolated, among the allocated weights; third and a fourth multiplier being provided with the weights corresponding to locations for interpolation of the first and the second interpolation pixels from the weight storage part, to multiply the weights by the first and the second interpolation pixels, and output as a third and a fourth multiplication data; and a second adder to calculate the candidate interpolation pixel by adding the third and the fourth multiplication data outputted from the third and the fourth multipliers,

wherein the sum of the weights allocated to the first and the second interpolation pixels in the location where the first and second interpolation pixels are interpolated is 1.

16. The motion compensation apparatus of claim 15, wherein the weight allocated to the first interpolation pixel decreases, and the weight allocated to the second interpolation pixel increases as the location for the first and the second interpolation pixels shifts from the center toward the border of the interpolated block.

17. The motion compensation apparatus of claim 11, further comprising a delayer to delay the inputted current frame or field for a predetermined time, and to provide the delayed frame or field to the first and the second motion compensation interpolators and the motion compensation part.

18. The motion compensation apparatus of claim 11, wherein the number of the provided second motion compensation interpolator is identical to the number of the peripheral blocks.

19. A block-based method of motion compensation comprising:

reading a first and a second pixel corresponding to a motion vector of an estimated current block, respectively from a current and a previous frame or field, and calculating a first interpolation pixel; reading a third and a fourth pixel corresponding to motion vectors estimated with respect to each of at least one peripheral block adjacent to the current block to be interpolated, respectively from the inputted current and previous frame or field, and calculating a second interpolation pixel; calculating a candidate interpolation pixel by allocating a predetermined weight to the first and the second interpolation pixels according to relative locations where the first and the second interpolation pixels are interpolated among the current blocks to be interpolated; analyzing the estimated motion vectors of the current block and the peripheral blocks to determine whether the current block and the peripheral blocks are continuous; and selecting among the first interpolation pixel and the candidate interpolation pixel as a final interpolation pixel according to the result determined in the determining operation, and then outputting the selected final interpolation pixel.

20. The method of claim 19, wherein the motion analyzing operation compares a deviation of the motion vectors of the current and the peripheral block, and then when the deviation is equal to or larger than a preset threshold, outputs a signal to the final interpolation pixel selector indicating to select the candidate interpolation pixel calculated from the candidate interpolation pixel calculator as the final interpolation pixel, and when the deviation is smaller than the preset threshold, outputs a signal indicating to select the first interpolation pixel calculated from the first motion compensation interpolator as the final interpolation pixel.

21. The method of claim 19, wherein the first and the second interpolation pixel calculating operations respectively comprise:

reading the first pixel corresponding to the motion vector of the current block from the inputted current frame or field; reading the second pixel corresponding to the motion vector of the current block from the inputted previous frame or field; multiplying a relative location correlation coefficient between the current and the previous frame or fields and the frame or field to be interpolated by the read first and second pixels, and outputting the result as a first and a second multiplication data; and calculating the first interpolation pixel by adding the first and the second multiplication data outputted from the first and the second multipliers,

wherein the sum of the relative location correlation coefficients which are respectively provided to the first and the second pixels is 1.

22. The method of claim 21, wherein the relative position correlation coefficient is calculated by a following equation:

$$r = \frac{b}{a+b},$$

where, r is the relative location correlation coefficient multiplied by the second pixel, a is a minimum distance between the frame or field to be interpolated and the previous frame or field, and b is a minimum distance between the frame or field to be interpolated and the current frame or field.

23. The method of claim 19, wherein the candidate interpolation pixel calculating operation comprises:

> reading and providing the respective weights corresponding to positions where the calculated first and second interpolation pixels are interpolated, among the weights allocated according to relative locations of the pixels to be interpolated in the current blocks;
> multiplying the weights by the first and the second interpolation pixels, and outputting the result as a third and a fourth multiplication data; and
> calculating the candidate interpolation pixel by adding the outputted third and fourth multiplication data,

> wherein the sum of the weights allocated to the first and the second interpolation pixels in the location where the first and second interpolation pixels are interpolated is 1.

24. The method of claim 23, wherein the weight allocated to the first interpolation pixel decreases and the weight allocated to the second interpolation pixel increases as the location for the first and the second interpolation pixels shifts from the center toward the border of the interpolated block.

25. The method of claim 19, further comprising delaying the inputted current frame or field for a predetermined time and then providing the delayed frame or field to the first and the second interpolation pixel calculating operation.

26. The method of claim 19, wherein the number of the provided second interpolation pixel is identical to the number of the peripheral blocks adjacent to the current block to be interpolated in the second interpolation pixel calculating operation.

27. A block-based method of motion compensation, comprising:

> selecting areas of image blocks where block artifacts occur, and
applying an overlap block motion compensation only to the selected areas.

28. The method of claim 27, wherein the overlap block motion compensation comprises:

> reading a first and a second pixel corresponding to a motion vector of an estimated current block, respectively from a current and a previous frame or field, and calculating a first interpolation pixel;
> reading a third and a fourth pixel corresponding to motion vectors estimated with respect to each of at least one peripheral block adjacent to the current block to be interpolated, respectively from the inputted current and previous frame or field, and calculating a second interpolation pixel;
> calculating a candidate interpolation pixel by allocating a predetermined weight to the first and the second interpolation pixels according to relative locations where the first and the second interpolation pixels are interpolated among the current blocks to be interpolated;
> determining whether the current block and the peripheral blocks are continuous; and
> selecting among the first interpolation pixel and the candidate interpolation pixel as a final interpolation pixel to be used in the overlap block motion compensation according to the result determined in the determining operation, and then outputting the selected final interpolation pixel.

29. The method of claim 27, wherein the selecting of the areas of the image blocks comprises selecting discontinuous area between blocks.

30. The method of claim 29, wherein the selecting of the discontinuous areas comprises analyzing a deviation between motion vectors of a current block and peripheral blocks.

31. The method of claim 27, further comprising selectively applying the overlap block motion compensation to non-selected areas of the image blocks to reduce blurring.

# FIG. 1

# FIG. 2

|  |  |  |
|:---:|:---:|:---:|
| $V_1$ | $V_2$ | $V_3$ |
| $V_4$ | $V_0$ | $V_5$ |
| $V_6$ | $V_7$ | $V_8$ |

S

# FIG. 3

$F_{n-1}$       $F_i$       $F_n$

a     b

# FIG. 4

sub block

$B_1$

$B_0$

(3,3)

# FIG. 5

START

READ FIRST AND SECOND PIXELS CORRESPONDING TO CURRENT MOTION VECTOR, RESPECTIVELY FROM CURRENT AND PREVIOUS FRAME/FIELDS —— S410

READ THIRD AND FOURTH PIXELS CORRESPONDING TO PERIPHERAL MOTION VECTOR, RESPECTIVELY FROM CURRENT AND PREVIOUS FRAME/FIELDS —— S420

MULTIPLY FIRST THROUGH FOURTH PIXELS BY CORRELATION AND CALCULATE FIRST THROUGH FOURTH MULTIPLICATION DATA —— S430

CALCULATE FIRST INTERPOLATION PIXEL BY ADDING FIRST AND SECOND MULTIPLICATION DATA AND CALCULATE SECOND INTERPOLATION PIXEL BY ADDING THIRD AND FOURTH MULTIPLICATION DATA —— S440

READ WEIGHT CORRESPONDING TO INTERPOLATION LOCATIONS OF FIRST AND SECOND INTERPOLATION PIXELS AND CALCULATE CANDIDATE INTERPOLATION PIXEL —— S450

DO BLOCK ARTIFACTS OCCUR IN PRESENT BLOCK TO BE INTERPOLATED? —— S460   N   S480

Y

SELECT FIRST INTERPOLATION PIXEL AS FINAL INTERPOLATION PIXEL

SELECT CANDIDATE INTERPOLATION PIXEL AS FINAL INTERPOLATION PIXEL —— S470

종 료

# FIG. 6

600

**European Patent Office**

**EUROPEAN SEARCH REPORT**

Application Number

EP 04 25 2962

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | HEISING G ET AL: "Wavelet-based very low bit-rate video coding using image warping and overlapped block motion compensation" IEE PROCEEDINGS: VISION, IMAGE AND SIGNAL PROCESSING, INSTITUTION OF ELECTRICAL ENGINEERS, GB, vol. 148, no. 2, 23 April 2001 (2001-04-23), pages 93-101, XP006016613 ISSN: 1350-245X | 1,2,6,7, 27,29-31 | H04N7/36 H04N7/46 H04N7/26 |
| Y | * page 93, left-hand column, paragraph 1 - right-hand column, paragraph 1 * | 3-5, 8-11, 13-19, 21-26,28 | |
| A | * page 94, left-hand column, paragraph 2 - page 95, right-hand column, paragraph 5; figures 1,2 * <br> * page 96, right-hand column, paragraph 3 * <br> * page 99, right-hand column, last paragraph - page 100, left-hand column, paragraph 1; figure 8 * <br> ----- | 12,20 | |
| X | CHOI B-T ET AL: "NEW FRAME RATE UP-CONVERSION USING BI-DIRECTIONAL MOTION ESTIMATION" IEEE TRANSACTIONS ON CONSUMER ELECTRONICS, IEEE INC. NEW YORK, US, vol. 46, no. 3, August 2000 (2000-08), pages 603-609, XP001142884 ISSN: 0098-3063 | 27,29-31 | TECHNICAL FIELDS SEARCHED (Int.Cl.7) <br> H04N |
| Y | * abstract * | 3-5, 8-11, 13-19, 21-26,28 | |
| A | * page 603, right-hand column, last paragraph - page 606, right-hand column, line 20; figures 2,5-7 * <br> ----- <br> -/-- | 12,20 | |

The present search report has been drawn up for all claims

| Place of search | Date of completion of the search | Examiner |
|---|---|---|
| Berlin | 11 August 2004 | Heising, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 04 25 2962

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ISHWAR P ET AL: "ON SPATIAL ADAPTATION OF MOTION-FIELD SMOOTHNESS IN VIDEO CODING" IEEE TRANSACTIONS ON CIRCUITS AND SYSTEMS FOR VIDEO TECHNOLOGY, IEEE INC. NEW YORK, US, vol. 10, no. 6, September 2000 (2000-09), pages 980-989, XP000959040 ISSN: 1051-8215 | 27,29,31 | |
| A | * abstract * <br><br> * page 981, left-hand column, paragraph 1 - page 983, left-hand column, paragraph 4; figures 1,2 * <br><br> ----- | 1-26,28, 30,31 | |
| A | J.-R. OHM: "Motion Grid Interpolation with Simple Contour Adaptation" PROCEEDINGS OF INTERNATIONAL PICTURE CODING SYMPOSIUM PCS'96, 13 March 1996 (1996-03-13), pages 285-290, XP002290774 MELBOURNE, AUSTRALIA * abstract * * page 285, left-hand column, paragraph 1 - page 287, right-hand column, paragraph 1; figures 1-3 * <br><br> ----- <br><br> -/-- | 11,12, 19,20, 27,30 | TECHNICAL FIELDS SEARCHED (Int.Cl.7) |

The present search report has been drawn up for all claims

| Place of search | Date of completion of the search | Examiner |
|---|---|---|
| Berlin | 11 August 2004 | Heising, G |

**European Patent Office**

## EUROPEAN SEARCH REPORT

Application Number

EP 04 25 2962

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HILMAN K ET AL: "USING MOTION-COMPENSATED FRAME-RATE CONVERSION FOR THE CORRECTION OF 3 : 2 PULLDOWN ARTIFACTS IN VIDEO SEQUENCES" IEEE TRANSACTIONS ON CIRCUITS AND SYSTEMS FOR VIDEO TECHNOLOGY, IEEE INC. NEW YORK, US, vol. 10, no. 6, September 2000 (2000-09), pages 869-877, XP000959030 ISSN: 1051-8215 * abstract * * page 869, right-hand column, last paragraph - page 870, left-hand column, paragraph 1; figure 2 * * page 870, right-hand column, last paragraph - page 871, right-hand column, last paragraph; figures 4-6 * * page 872, left-hand column, last paragraph - page 873, right-hand column, line 11 * | 1-31 | |
| X,P<br><br>A | LEE SUNG-HEE, KWON OHJAE, PARK RAE-HONG: "Weighted-adaptive motion-compensated frame rate up-conversion" IEEE TRANSACTIONS ON CONSUMER ELECTRONICS, vol. 49, no. 3, August 2003 (2003-08), pages 485-492, XP002290775 * abstract *<br><br>* page 486, right-hand column, paragraph 2 - page 488, left-hand column, paragraph 2; figures 1-5 * | 11, 13-15, 17-19, 21-23, 25-27, 29,31<br>1-10,12, 16,20, 24,28,30 | TECHNICAL FIELDS SEARCHED (Int.Cl.7) |

The present search report has been drawn up for all claims

| Place of search | Date of completion of the search | Examiner |
|---|---|---|
| Berlin | 11 August 2004 | Heising, G |

EPO FORM 1503 03.82 (P04C01)